# EUROPEAN PATENT APPLICATION

(11) **EP 3 115 629 A1**
(43) Date of publication of application: **11.01.2017**
(21) Application number: 16178663.7
(22) Date of filing: 08.07.2016
(51) Int. Cl.: F16C 1/26, F16L 11/08

(54) **OUTER FOR AUTOMOTIVE POWER TRANSMISSION CABLES**

(30) Priority: 08.07.2015 KR 20150097187
(71) Applicant: Daedong System Co., Ltd., Incheon21629 (KR)
(72) Inventor: LEE, Ho Chul, 21363 Incheon (KR); LEE, Won Min, 21917 Incheon (KR); MAENG, Joo Nam, 21350 Incheon (KR)
(74) Representative: Jell, Friedrich

(57) **Abstract**

An outer for automotive power transmission cables is used together with an inner movable between automotive components in a direction of an external force, in order to transmit power between the automotive components. The outer for automotive power transmission cables includes: a liner (110) surrounding the inner and allowing the inner to move relative to the liner (110); a plurality of steel wires (120) arranged around an outer circumferential surface of the liner (110) in close contact with each other without gaps; a connection wire (130) spirally arranged around outer circumferential surfaces of the steel wires (120) in such a manner that a gap is formed between neighboring turns of the connection wire (130) to allow the steel wires (120) to bend; and a resin layer (140) enclosing the connection wire (130).

## Description

### BACKGROUND

### 1. Field

One or more embodiments relate to an automotive power transmission cable unit, and more particularly, to an outer for automotive power transmission cables and an automotive power transmission cable unit, the outer including a liner and a resin coating on steel wires surrounding the liner and having an improved structure to suppress deformation caused by heat or temperature variation.

### 2. Description of the Related Art

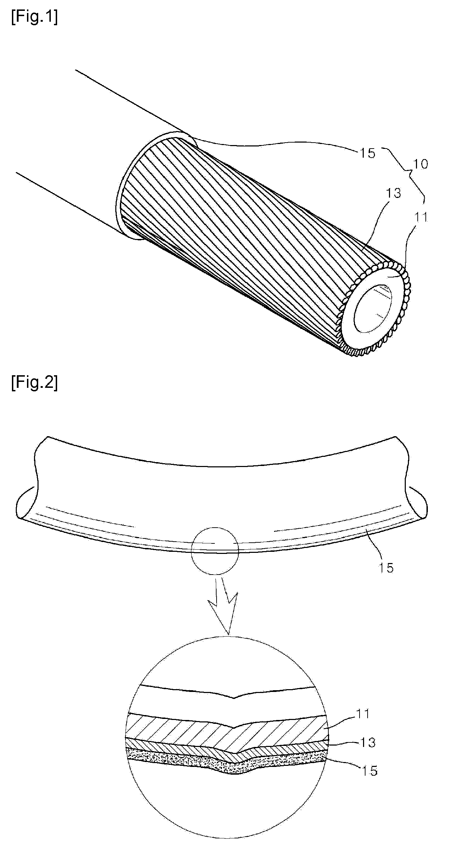

In general, as illustrated in FIG. 1, an automotive power transmission cable unit includes: a flexible outer 10 having a liner 11, steel wires 13 surrounding the liner 11, and a resin coating layer 15; and an internal connection cable (not shown) movably inserted in the liner 11 of the outer 10.

If such automotive power transmission cable units of the related art are used for a long time, as illustrated in FIG. 2, the steel wires 13 of the outer 10 may expand because of heat, temperature variation, or tension repeatedly applied to the outer 10 during the operation of the internal connection cable, and thus the resin coating layer 15 may expand. Thereafter, the outer 10 may not return to its original shape.

If the outer 10 expands in a bent state, expansion of a bent portion of the outer 10 is greater than the other portion of the outer 10, and thus the outer 10 may not return to its original shape after expansion.

If the outer 10 does not return to its original shape as described above, the automotive power transmission cable unit may physically interfere with other automotive components and the internal connection cable may not be smoothly operated.

### SUMMARY

One or more embodiments include an outer for automotive power transmission cables and an automotive power transmission cable unit, which may suppress expansion of the outer even though tension or heat is repeatedly applied to the outer.

Additional aspects will be set forth in part in the description which follows and, in part, will be apparent from the description, or may be learned by practice of the presented embodiments.

According to one or more embodiments, an outer for automotive power transmission cables is used together with an inner movable between automotive components in a direction of an external force, in order to transmit power between the automotive components, the outer including: a liner surrounding the inner and allowing the inner to move relative to the liner; a plurality of steel wires arranged around an outer circumferential surface of the liner in close contact with each other without gaps; a connection wire spirally arranged around outer circumferential surfaces of the steel wires in such a manner that a gap is formed between neighboring turns of the connection wire to allow the steel wires to bend; and a resin layer enclosing the connection wire.

The liner may include a synthetic resin to reduce fiction with the inner.

The connection wire may be arranged around the outer circumferential surfaces of the steel wires in such a manner that a gap formed between the neighboring turns of the connection wire is variable according to bending of the steel wires.

According to one or more embodiments, an automotive power transmission cable unit includes: an inner movable between automotive components in a direction of an external force, in order to transmit power between the automotive components; a liner surrounding the inner and allowing the inner to move relative to the liner; a plurality of steel wires arranged around an outer circumferential surface of the liner in close contact with each other without gaps; a connection wire spirally arranged around outer circumferential surfaces of the steel wires in such a manner that a gap is formed between neighboring turns of the connection wire to allow the steel wires to bend; and a resin layer enclosing the connection wire.

### BRIEF DESCRIPTION OF THE DRAWINGS

These and/or other aspects will become apparent and more readily appreciated from the following description of the embodiments, taken in conjunction with the accompanying drawings in which:
FIG. 1 is a perspective view of an automotive power transmission outer of the related art;
FIG. 2 is a view illustrating expansion of the automotive power transmission outer of the related illustrated in FIG. 1;
FIG. 3 is a perspective view of an outer for automotive power transmission cables according to an embodiment;
FIG. 4 is a cross-sectional view taken along line IV-IV of FIG. 3; and
FIG. 5 is a view illustrating an example in which expansion of steel wires of the outer for automotive power transmission cables illustrated in FIG. 3 is suppressed.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, an outer for automotive power transmission cables will be described according to an embodiment with reference to the accompanying drawings.

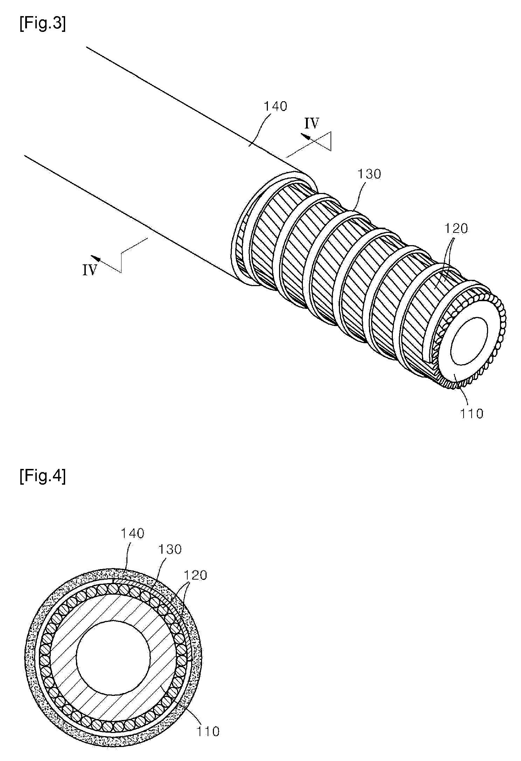

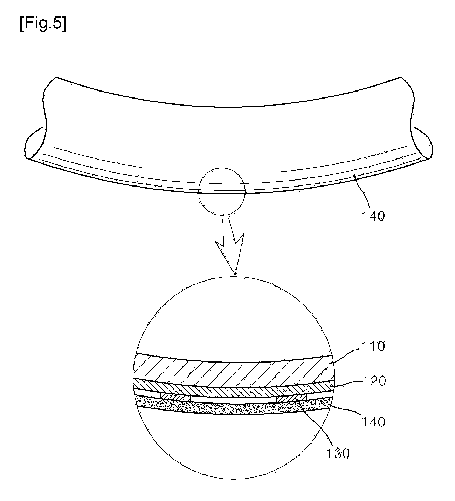

FIG. 3 is a perspective view of an outer for automotive power transmission cables according to an embodiment, FIG. 4 is a cross-sectional view taken along line IV-IV of FIG. 3, and FIG. 5 is a view illustrating an example in which steel wires of the outer for automotive power transmission cables illustrated in FIG. 3 is suppressed.

Referring to FIGS. 3 to 5, the outer for automotive power transmission cables of the embodiment includes a liner 110, a steel wire 120, a connection wire 130, and a resin layer 140.

The outer for automotive power transmission cables of the embodiment is used together with an inner (not shown) movable between automotive components in a direction of an external force, in order to transmit power between the automotive components. To this end, the outer for automotive power transmission cables includes the liner 110, the steel wire 120, the connection wire 130, and the resin layer 140.

The liner 110 surrounds the inner in a state in which the inner is movable relative to the liner 110. For example, the liner 110 may include a material that is flexible unlike the inner.

For example, the outer may include a plurality of steel wires 120 arranged around an outer circumferential surface of the liner 110 in close contact with each other without gaps therebetween.

The connection wire 130 is spirally arranged around outer circumferential surfaces of the steel wires 120, and a gap may be formed between neighboring turns of the connection wire 130 to allow the steel wires 120 to bend.

The resin layer 140 encloses the connection wire 130 and protects elements of the outer from abrasion or contact with external components.

According to the embodiment, the liner 110 may include a synthetic resin to reduce friction with the inner.

Therefore, according to the embodiment, when a cable is operated, expansion of the steel wires 120 caused by tension or heat repeatedly applied to the outer for automotive power transmission cables may be suppressed, and thus deformation of the outer for automotive power transmission cables may be suppressed.

In addition, according to an embodiment, although not shown in FIGS. 3 to 5, the connection wire 130 may be arranged around the outer circumferential surfaces of the steel wires 120 in such a manner that a gap between the neighboring turns of the connection wire 130 is variable according to bending of the steel wires 120.

As described above, according to the embodiment, as the gap between the neighboring turns of the connection wire 130 arranged around the outer circumferential surfaces of the steel wires 120 is variable according to bending of the steel wires 120, the outer may be elastically deformed according to bending of the steel wires 120 and may easily return to its original shape after deformation.

Although not shown, according to an embodiment, an automotive power transmission cable unit (not shown) for transmitting power between automotive components may include an inner (not shown), the liner 110, the steel wires 120, the connection wire 130, and the resin layer 140.

The inner is movable between the automotive components in a direction of an external force, in order to transmit power between the automotive components.

The liner 110 surrounds the inner in a state in which the inner is movable relative to the liner 110. In addition, the steel wires 120 are arranged around an outer circumferential surface of the liner 110 in close contact with each other without gaps therebetween. In addition, the connection wire 130 is spirally arranged around outer circumferential surfaces of the steel wires 120, and a gap is formed between the neighboring turns of the connection wire 130 to allow the steel wires 120 to bend. In addition, the resin layer 140 encloses the connection wire 130 and includes a flexible material.

The automotive power transmission cable unit of the embodiment includes the inner unlike the outer for automotive power transmission cables of the previous embodiment. The automotive power transmission cable unit may be a product provided according to another embodiment.

As described above, according to the one or more of the above embodiments, when a cable is operated, expansion of the steel wires caused by tension or heat repeatedly applied to the outer for automotive power transmission cables may be suppressed, and thus deformation of the outer for automotive power transmission cables may be suppressed. Therefore, the outer for automotive power transmission cables may be prevented from malfunctioning.

In addition, according to the one or more of the above embodiments, the connection wire is arranged around the outer circumferential surfaces of the steel wires in such a manner that a gap between the neighboring turns of the connection wire is variable according to bending of the steel wires. Therefore, the outer for automotive power transmission cables may be elastically deformed according to bending of the steel wires and may easily return to its original shape after deformation.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope of the inventive concept as defined by the following claims.

## Claims

1. An outer for automotive power transmission cables, the outer being used together with an inner movable between automotive components in a direction of an external force, in order to transmit power between the automotive components, the outer comprising:
a liner surrounding the inner and allowing the inner to move relative to the liner;
a plurality of steel wires arranged around an outer circumferential surface of the liner in close contact with each other without gaps;
a connection wire spirally arranged around outer circumferential surfaces of the steel wires in such a manner that a gap is formed between neighboring turns of the connection wire to allow the steel wires to bend; and
a resin layer enclosing the connection wire.

2. The outer of claim 1, wherein the liner comprises a synthetic resin to reduce fiction with the inner.

3. The outer of claim 1, wherein the connection wire is arranged around the outer circumferential surfaces of the steel wires in such a manner that a gap formed between the neighboring turns of the connection wire is variable according to bending of the steel wires.

4. An automotive power transmission cable unit comprising:
an inner movable between automotive components in a direction of an external force, in order to transmit power between the automotive components;
a liner surrounding the inner and allowing the inner to move relative to the liner;
a plurality of steel wires arranged around an outer circumferential surface of the liner in close contact with each other without gaps;
a connection wire spirally arranged around outer circumferential surfaces of the steel wires in such a manner that a gap is formed between neighboring turns of the connection wire to allow the steel wires to bend; and
a resin layer enclosing the connection wire.
